# EUROPEAN PATENT APPLICATION

(11) **EP 1 705 879 A1**
(43) Date of publication of application: **27.09.2006**
(21) Application number: 04702438.5
(22) Date of filing: 15.01.2004
(51) Int. Cl.: H04M 1/66, H04Q 9/00, E05B 49/00

(54) **KEY SYSTEM, KEY DEVICE AND INFORMATION APPARATUS**

(71) Applicant: MITSUBISHI DENKI KABUSHIKI KAISHA, Chiyoda-ku, Tokyo 100-8310 (JP)
(72) Inventor: Akiyama, Koji c/o Mitsubishi Denki K. K., Tokyo 100-8310 (JP)
(74) Representative: Popp, Eugen
(86) International application number: PCT/JP2004/000255
(87) International publication number: WO 2005/069590

(57) **Abstract**

The present invention relates to security technology for information devices such as cellular phones, personal computers and the like. More specifically, the present invention is intended to provide a technique capable of restricting the use of or removing the restrictions on the use of information devices with a low-cost configuration.

In order to realize this object, a key system (100) includes a key device (1), and a cellular phone (11) capable of being locked or released from the lock by the key device (1). An LED (4) of the key device (1) and an LED (14) of the cellular phone (11) are capable of sending data therebetween, and key information is sent from the LED (4) to the LED (14). The cellular phone (11) is locked or released from the lock based on the key information received by the LED (14).

## Description

### Technical Field

The present invention relates to security technology for information devices such as cellular phones, personal computers and the like. More specifically, the present invention relates to a technique for restricting the use of or removing the restrictions on the use of information devices by using key information.

### Background Art

A patent publication 1 discloses security technology for information devices. According to the technique disclosed in the patent publication 1, an ID (identification information) unique to an information device is stored in an external storage medium. When the external storage medium is attached to the information device, the ID stored in the external storage medium is read. The actuation of the information device is restricted according to whether the ID in the external storage medium coincides with an ID stored in the information device.

In the above-described information device capable of prohibiting its use by a person other than an authorized user, it is desired to improve security with a low-cost configuration.

Patent publications 2, 3 and 4 each disclose a technique of data communication by using LEDs.
Patent Publication 1
   Japanese Patent Application Laid-Open No. 2001-331233
Patent Publication 2
   Japanese Patent Application Laid-Open No. 2002-26812
Patent Publication 3
   United States Patent Application Publication No. 2003/0189211 A1
Patent Publication 4
   International Publication No. 03/084102 A1

### Disclosure of the Invention

The present invention has been made in view of the above-mentioned facts. An object of the present invention is to provide a technique capable of restricting the use of or removing the restrictions on the use of an information device with a low-cost configuration.

A key system according to the present invention includes: an information device including a first LED responsible for receipt of data and a first controller; and a key device including a second LED responsible for transmission of data, a storage part for storing key information to the information device, and a second controller for controlling the operation of the second LED. The second controller in the key device causes the second LED to send the key information stored in the storage part. The first LED in the information device receives the key information sent from the second LED. The first controller in the information device at least either locks the information device or releases a lock of the information device based on the key information received by the first LED.

A key device according to the present invention is applied for use in a key system in which data is transmitted between the key device and an information device through LEDs. The key system includes the key device, and the information device that is either locked or released from a lock by the key device. The key device includes: an LED responsible for transmission of data; a storage part for storing key information to the information device; and a controller for controlling the operation of the LED. The controller causes the LED to send the key information stored in the storage part.

An information device according to the present invention is applied for use in a key system in which data is transmitted between a key device and the information device through LEDs. The key system includes the key device, and the information device that is either locked or released from a lock by the key device. The information device includes: an LED responsible for receipt of data; and a controller. The LED receives key information to the information device sent from the key device. The controller at least either locks the information device or releases a lock of the information device based on the key information received by the LED.

According to the key system, the key device or the information device of the present invention, the information device is capable of being locked or being released from the lock by data communication between LEDs. Thus it is allowed to form a key system at a low cost that is capable of restricting the use of the information device or removing the restrictions on the use of the information device.

These and other objects, features, aspects and advantages of the present invention will become more apparent from the following detailed description of the present invention when taken in conjunction with the accompanying drawings.

### Brief Description of Drawings

Fig. 1 is a block diagram showing the configuration of a key system according to a first embodiment of the present invention;
Fig. 2 is a circuit diagram showing a part of the configuration of the key system according to the first embodiment of the present invention;
Fig. 3 is a flow chart showing the operation of a key device according to the first embodiment of the present invention;
Fig. 4 shows the operation of the key device according to the first embodiment of the present invention;
Fig. 5 is a flow chart showing the operation of the key device according to the first embodiment of the present invention;
Fig. 6 is a flow chart showing the operation of an information device according to the first embodiment of the present invention;
Fig. 7 is a block diagram showing the configuration of a key system according to a second embodiment of the present invention; and
Fig. 8 is a block diagram showing the configuration of a modification of the key system according to the second embodiment of the present invention.

### Best Mode for Carrying Out the Invention

### First Embodiment

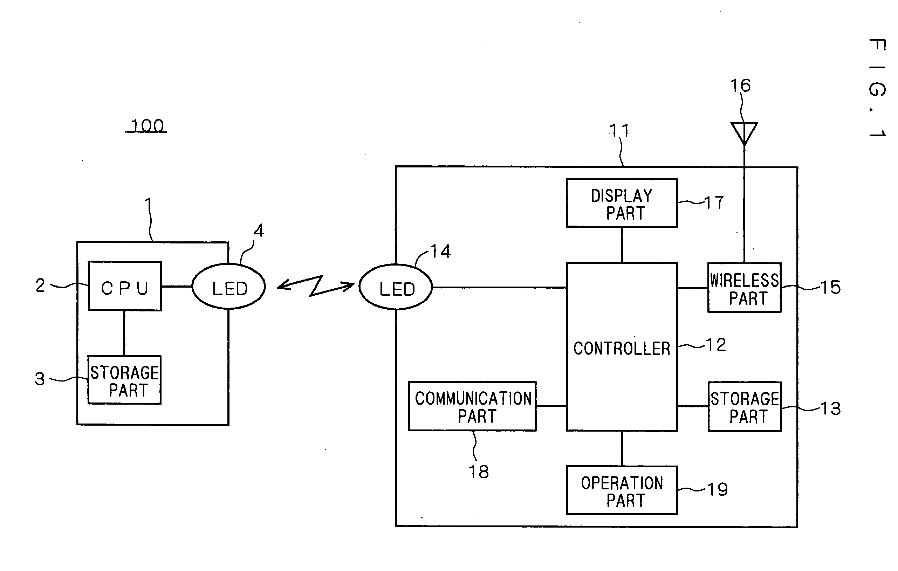

Fig. 1 is a block diagram showing the configuration of a key system 100 according to a first embodiment of the present invention. As shown in Fig. 1, the key system 100 of the first embodiment includes a key device 1 and a cellular phone 11 as one of information devices. The key device 1 and the cellular phone 11 perform data communication therebetween such as asynchronous serial data communication. In the key system 100, the key device 1 is capable of locking the cellular phone 11 or releasing the lock of the cellular phone 11. Here, "lock" means restriction of at least part of the use of an information device, in other words, restriction of at least part of the function of the information device.

The key device 1 has a CPU 2, a storage part 3 with a ROM and a RAM, and an LED 4 for emitting visible light. These constituent elements are stored in a casing smaller than generally-used cellular phones, for example. The CPU 2 serves as a controller for controlling the operations of the storage part 3 and the LED 4, and writes and reads data to and from the storage part 3. The storage part 3 stores an execution program of the CPU 1 and the like. The storage part 3 also stores key information sent from the cellular phone 11. The LED 4 is capable of sending and receiving serial data to and from the cellular phone 11. The key information stored in the key device 1 is used for locking the cellular phone 11 or releasing the lock of the cellular phone 11, which will be discussed in detail later.

The cellular phone 11 has a controller 12, a storage part 13, an LED 14, a wireless part 15, an antenna 16, a display part 17, a communication part 18 and an operation part 19. The controller 12 includes an interface circuit with other blocks, a CPU and the like, and is responsible for control of the operations of other blocks, management of the overall operation of the cellular phone 11 and others. The storage part 13 includes a ROM and a RAM. The storage part 13 stores an execution program of the CPU in the controller 12, an ID number such as a product number unique to the cellular phone 11 intended for use as key information, and the like.

The LED 14 is capable of sending and receiving serial data to and from the key device 1, and is directly connected to the CPU in the controller 12. The LED 14 is controlled by the CPU in the controller 12 to flash at the time of receipt of a signal from a remote terminal. The communication part 18 has a microphone, a speaker and the like, and outputs and receives audio signals to and from the outside. The operation part 19 is formed by a plurality of key switches for inputting numeric values, characters and the like.

The display part 17, formed for example by a liquid crystal display (LCD), is operative to display various kinds of information such as character information received by the operation part 19 and image information sent from a remote terminal. The wireless part 15 is a transmitter/receiver circuit responsible for wireless communication to and from a base station. An audio signal received by the microphone of the communication part 18 is encoded at the controller 12, and is thereafter sent to the remote terminal by way of the wireless part 15 and the antenna 16. Audio data sent from the remote terminal is received by way of the antenna 16 and the wireless part 15, decoded at the controller 12, and is thereafter output from the speaker of the communication part 18.

When a user operates the operation part 19, the information of this operation is sent to the controller 12, whereby the controller 12 controls the operations of other blocks such as the display part 17 and the communication part 18 based on the received information. Then the cellular phone 11 becomes operative to perform functions according to the operations at the operation part 19. As an example, the cellular phone 11 makes a call to the remote terminal or receives a call from the remote terminal.

Like generally-used cellular phones, the cellular phone 11 of the first embodiment is capable of being locked by operating the operation part 19, without using the key device 1. Further, the lock of the cellular phone 11 can be released by operating the operation part 19.

As an example, when a predetermined key switch of the operation part 19 is pressed to perform a certain operation on the operation part 19, the information of this operation is sent to the controller 12. Even when the operation part 19 is operated thereafter, the controller 12 refuses to accept operations on the operation part 19 except certain operations for receiving a call, for turning the cellular phone 11 on and off, or for releasing the lock. The controller 12 thereby prohibits the execution of functions corresponding to the operations the acceptances of which are refused. As a result, the cellular phone 11 is locked.

In the cellular phone 11, when the operation part 19 is subjected to an operation to release the lock such as receipt of a security code for releasing the lock, the information of this operation is sent to the controller 12. The controller 12 thereby becomes operative to accept the operations the acceptances of which have been refused. As a result, the lock of the cellular phone 11 is released. The controller 12 writes information indicating whether or not the cellular phone 11 is currently being locked to the storage part 13, and updates this information each time the lock condition changes.

Next, a way of sending and receiving data to and from the LEDs 4 and 14 is discussed. Data transmission to and from the LED 14 is realized in the same way as data transmission to and from the LED 4, and thus will not be discussed in detail.

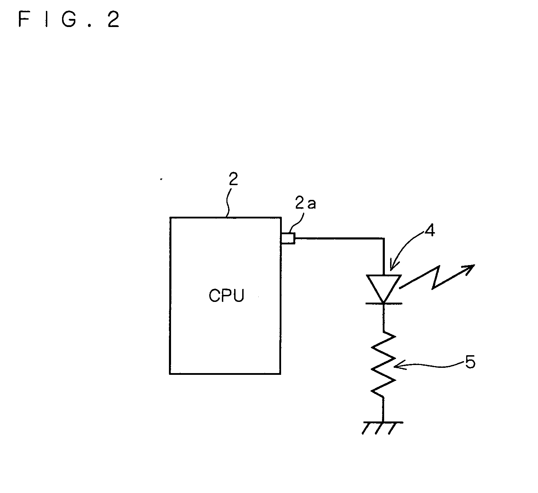

Fig. 2 shows the connection between the CPU 2 and the LED 4 in the key device 1. Like generally-used CPUs, the CPU 2 has a plurality of input and output ports 2a, one of which is connected to the anode of the LED 4 as shown in Fig. 2. The cathode of the LED 4 is grounded through a resistor 5. Data stored in a predetermined resistor in the CPU 2 is changed to arbitrarily determine whether the input and output port 2a is used as an input port or as an output port.

When the input and output port 2a is set as an output port and a high-level signal is output to the input and output port 2a, a current flows through the LED 4 to cause the LED 4 to emit light. When a low-level signal is output to the input and output port 2a, no current flows through the LED 4 so that the LED 4 stops emission of light.

The LED 4 is capable of sending data to the cellular phone 11 by the light emission thereof. In the first embodiment, data "1" or "0" is represented by the difference of the period of light emission of the LED 4. As an example, the LED 1 emits light for 1 ms to output data "1", emits light for 0.5 ms to output data "0".

As discussed, the input and output port 2a of the CPU 2 is set as an input port to cause the LED 4 to emit light, whereby data is sent from the LED 4. At this time, data is serially sent at predetermined transmission speed. The data sent from the key device 1 is received by the LED 14 of the cellular phone 11.

Like in the key device 1, in the cellular phone 11, the anode of the LED 14 is connected to the input and output port of the CPU in the controller 12, and the cathode of the LED 14 is grounded through a resistor. This input and output port is set as an input port to cause the LED 14 to emit light, whereby serial data is sent from the LED 14 at predetermined transmission rate. In the following, the period during which the LEDs 4 and 14 emit light to output the data "1" is referred to as "light emission period LT1", whereas the period during which the LEDs 4 and 14 emit light to output the data "0" is referred to as "light emission period LT0".

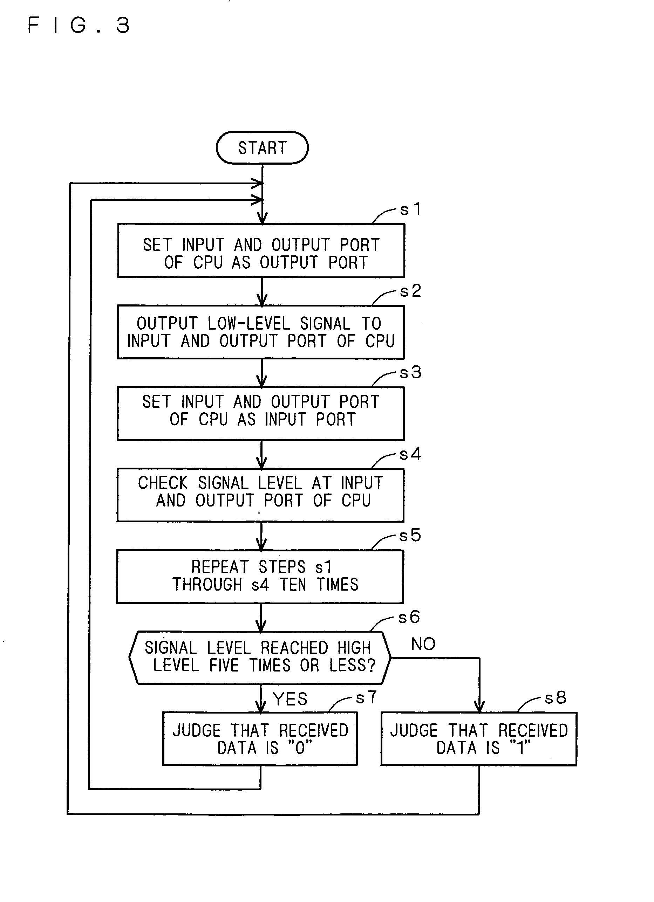

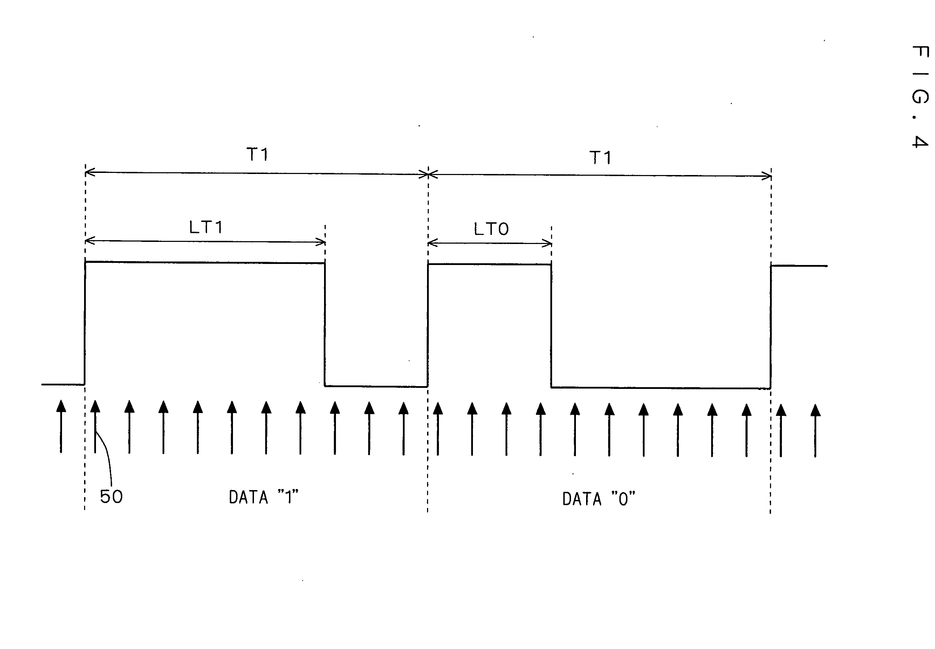

Next, it is discussed how the LED 4 receives data with reference to Figs. 3 and 4. Fig. 3 is a flow chart showing the receipt of data at the LED 4. Fig. 4 shows this receipt of data. As shown in Fig. 3, the CPU 2 sets the input and output port 2a as an output port in step s1. Then in step s2, the CPU2 outputs a low-level signal to the input and output port 2a, whereby electric charges accumulated in the junction capacitance at the PN junction of the LED 4 are discharged.

Next, the CPU 2 sets the input and output port 2a as an input port in step s3, and checks the signal level at the input and output port 2a in step s4. When the LED 4 receives data from the cellular phone 11, namely, when the LED 4 receives light emitted from the LED 14, electric charges are accumulated in the junction capacitance of the LED 4 so that the signal level at the input and output port 2a becomes high. Thus the CPU 2 is allowed to confirm the receipt of data sent from the cellular phone 11 by checking the signal level at the input and output port 2a. Steps s1 through s4 discussed above are repeated for example ten times in step s5 to check the signal level at the input and output port 2a ten times.

Arrows 50 in Fig. 4 indicate times for the CPU 2 to check the signal level at the input and output port 2a in step s4. As shown in Fig. 4, step s4 is repeated at evenly spaced time intervals, and is executed ten times in one cycle of a data transmission period T1 of serial data communication between the key device 1 and the cellular phone 11. Namely, the CPU 2 checks the signal level at the input and output port 2a ten times in one cycle of the data transmission period T1.

Next, after the signal level at the input and output port 2a was checked ten times, it is determined in step s6 that the signal level reached high level five times or less, for example. In this case, the flow proceeds to step s7 at which the CPU 2 judges that the data received by the LED 4 is "0". When the signal level reached high level six times or more, the flow proceeds to step s8 at which the CPU 2 judges that the data received by the LED 4 is "1". In the example of Fig. 4, high level is detected seven times by the CPU 2 when the received data is "1", whereas high level is detected four times by the CPU 2 when the received data is "0".

As discussed, the signal level at the input and output port 2a is checked several times to count the number of times the signal level thereof reaches high level, to thereby determine the period of light emission of the LED 14. As a result, the CPU 2 is allowed to make judgment as to whether data is "1" or "0" represented by the difference of the period of light emission of the LED. The foregoing steps are repeatedly performed to thereby allow the LED 4 to continuously receive data sent from the cellular phone 11.

The LED 14 of the cellular phone 11 receives data in the same manner as the LED 4. The signal level at the input and output port of the CPU in the controller 12 is checked several times to count the number of times the signal level thereof reaches high level, thereby determining the period of light emission of the LED 4. As a result, the CPU in the controller 12 is allowed to make judgment as to whether data is "1" or "0" represented by the difference of the period of light emission of the LED.

The above-discussed data receipt of the CPU by checking the signal level at the input and output port connected to the LED will be referred to as "receipt of LED data".

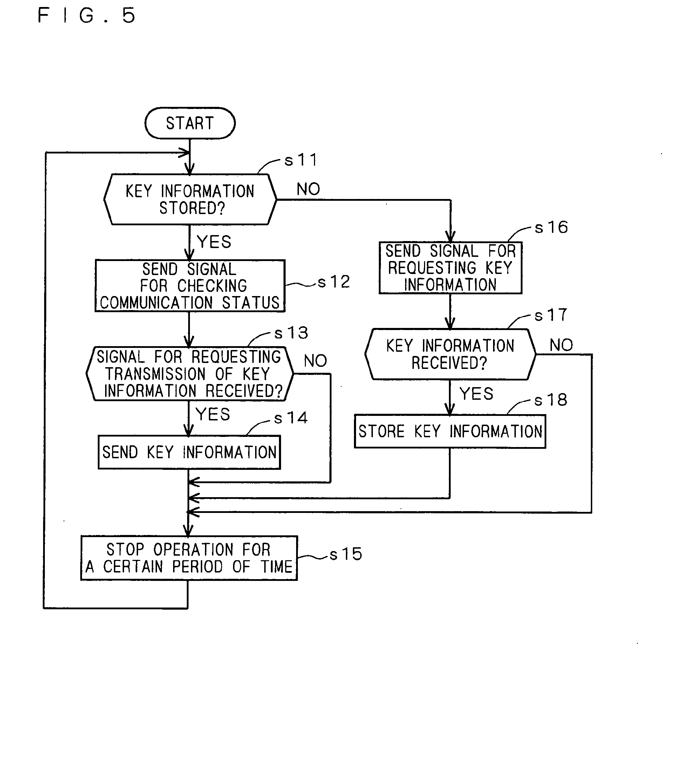

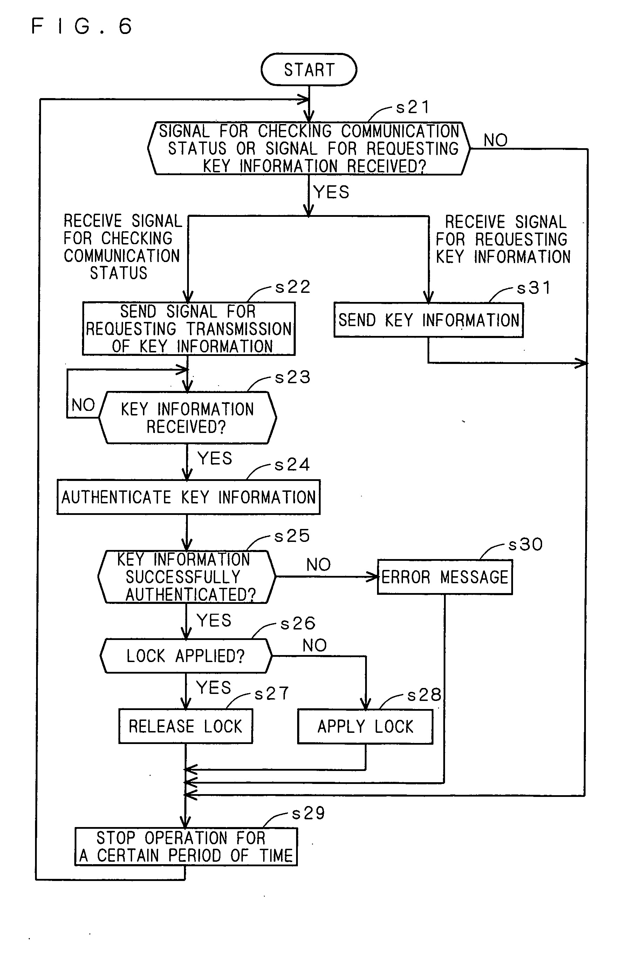

Next, it is discussed how the cellular phone 11 is locked or how the lock of the cellular phone 11 is released by using the key device 1 in the key system 100 of the first embodiment. Figs. 5 and 6 are flow charts showing the respective operations of the key device 1 and the cellular phone 11 in this case. First, the operation of the key device 1 is discussed with reference to Fig. 5.

As shown in Fig. 5, the CPU 2 of the key device 1 determines whether or not key information is stored in the storage part 3 in step s 11. In the initial state of the key device 1, key information is not stored in the storage part 3. When the CPU 2 determines that there is no key information stored in the storage part 3, the flow proceeds to step s16 at which the CPU 2 controls the operation of the LED 4 to cause the LED 4 to send a signal for requesting key information. The key device 1 thereby determines whether or not the key device 1 is capable of communicating with the cellular phone 11, and requests the cellular phone 11 to provide key information.

When the cellular phone 11 is positioned within the area in which the key device 1 and the cellular phone 11 can communicate with each other and the LED 4 receives key information from the cellular phone 11 that has received the signal for requesting key information in step s17, the CPU 2 determines that the key device 1 is capable of communicating with the cellular phone 11 and stores the received key information in the storage part 3. The key information to the cellular phone 11 is thereby stored in the key device 1, and the stored key information is shared between the key device 1 and the cellular phone 11. Then in step s 15, the CPU 2 stops its operation for a certain period of time. After the certain period of time has elapsed, step s11 is repeated.

When the cellular phone 11 is positioned outside the area in which the key device 1 and the cellular phone 11 can communicate with each other and the LED 4 does not receive key information in a predetermined period of time from the cellular phone 11 in step s17, the CPU 2 determines that the key device 1 is incapable of communicating with the cellular phone 11. Then in step s 15, the CPU 2 stops its operation for a certain period of time. After the certain period of time has elapsed, step s11 is repeated.

When the CPU 2 confirms the presence of key information in the storage part 3 in step s11, the CPU 2 controls the operation of the LED 4 to cause the LED 4 to send a signal for checking communication status in step s12. Then the key device 1 determines whether or not the key device 1 is capable of communicating with the cellular phone 11. When the cellular phone 11 is positioned within the area in which the key device 1 and the cellular phone 11 can communicate with each other and the LED 4 receives a signal for requesting transmission of key information from the cellular phone 11 that has received the signal for checking communication status in step s13, the CPU 2 determines that the key device 1 is capable of communicating with the cellular phone 11 in step s13, and that the key information is requested by the cellular phone 11.

Next, in step s 14, the CPU 2 reads the key information from the storage part 3 and causes the LED 4 to send the key information thereby read. Then in step s15, the CPU 2 stops its operation for a certain period of time. After the certain period of time has elapsed, step s11 is repeated to perform the above-mentioned operations again.

As discussed, the key device 1 determines whether or not the key device 1 is capable of communicating with the cellular phone 11 at regular intervals. When the key device 1 and the cellular phone 11 can communicate with each other, the key device 1 sends key information stored therein to the cellular phone 11 in response to the request from the cellular phone 11. Then as discussed below, authentication of the key information is realized in the cellular phone 11. When the key information is successfully authenticated, the lock of the cellular phone 11 is released or the cellular phone 11 is locked.

Next, the operation of the cellular phone 11 is discussed with reference to Fig. 6. As shown in Fig. 6, the CPU in the controller 12 performs the receipt of LED data in step s21. When the LED 14 of the cellular phone 11 receives neither the signal for checking communication status nor the signal for requesting key information, the flow proceeds to step s29 at which the CPU in the controller 12 stops the receipt of LED data for a certain period of time. After the certain period of time has elapsed, step s21 is repeated.

When the LED 14 receives the signal for requesting key information from the key device 1 in step 21, the controller 12 determines that the key device 1 is positioned within the area in which the cellular phone 11 and the key device 1 can communicate with each other, and that key information is requested by the key device 1. Then in step s31, the controller 12 reads an ID number for use as key information from the storage part 13, and controls the operation of the LED 14 to cause the LED 14 to send this ID number. Next, the CPU 12 in the controller 12 stops the receipt of LED data for a certain period of time in step s29. After the certain period of time has elapsed, step s21 is repeated.

When the LED 14 receives the signal for checking communication status from the key device in step s21, the controller 12 sends the signal for requesting transmission of key information in step s22 to request the key device 1 to provide key information. When the LED 14 thereafter receives key information from the key device 1 in step s23, the controller 12 authenticates the received key information in step s24. More specifically, the controller 12 determines whether or not the key information stored in the storage part 13 and the key information received from the key device 1 coincide with each other. When there is coincidence therebetween, the authentication is deemed to be successful. When there is no coincidence therebetween, the authentication is deemed to be unsuccessful. When the controller 12 fails to authenticate the received key information in step s25, the controller 12 controls the operation of the display part 17 to cause the display part 17 to display an error message notifying a user of the failure of authentication.

When the key information is successfully authenticated in step s25, the controller 12 determines whether or not the cellular phone 11 is currently being locked in step s26. As discussed above, the storage part 13 contains the information indicating whether or not the cellular phone 11 is being locked. Thus by making reference to this information, the controller 12 is allowed to check the current lock condition of the cellular phone 11. Then by a predetermined operation at the operation part 19, or when the cellular phone 11 is locked by the key device 1, the controller 12 makes a predetermined operation acceptable in step s27 the acceptance of which has been refused, whereby the lock of the cellular phone 11 is released.

When the lock of the cellular phone 11 is released in step s26, the controller 12 refuses to accept operations in step s27 except a certain operation for receiving a call at the operation part 19, for example, whereby the cellular phone 11 is locked.

The controller 12 thereby locks the cellular phone 11 or releases the lock of the cellular phone 11 based on the key information received from the key device 1. Then the flow proceeds to step s29 at which the CPU in the controller 12 stops the receipt of LED data for a certain period of time. After the certain period of time has elapsed, step s21 is repeated to perform the same operations again.

As discussed, the cellular phone 11 causes the LED 14 to receive key information from the key device 1. Then the cellular phone 11 authenticates the received key information to perform lock or release the lock when the key information is successfully authenticated. When the authentication of the received key information is unsuccessful, the cellular phone 11 maintains current conditions. The cellular phone 11 gives a higher priority to the light emission of the LED 14 at the time of receipt of a signal than to the data communication with the key device 1. Namely, when the LED 14 receives a signal from a remote terminal during the data communication with the LED 4 of the key device 1, the cellular phone 11 stops this data communication and causes the LED 14 to flash to notify a user of the receipt of the signal.

As discussed, in the key system 100, a user brings the key device 1 close to the cellular phone 11 so that the key device 1 is within an area capable of communicating with the cellular phone 11. Data communication between LEDs thereby starts to lock the cellular phone 11 or release the lock of the cellular phone 11 by using the data communication between the LEDs.

Like in the first embodiment, a CPU directly controls the operation of an LED to realize the transmission and receipt of data to and from the LED. Further, like the cellular phone 11, a generally-used cellular phone is equipped with an LED that emits light at the time of receipt of a signal. Thus the cellular phone 11 does not require a specific device for realizing data communication to and from an LED. Further, an LED is normally less expensive than an external storage medium such as a memory card. Thus by locking the cellular phone 11 or releasing the lock of the cellular phone 11 by using data communication to and from an LED as in the key system 100, a key system with improved security can be formed with a lower-cost configuration as compared to the technique of the patent publication 1.

In the first embodiment, the product number of the cellular phone 11 is used as an ID number for use as key information. When the cellular phone 11 is a third-generation terminal (3G terminal), an ID number may alternatively be an IMEI (international mobile equipment identity) number stored in a UIM (user identity module) card normally provided to the cellular phone 11. In order to further improve security, an ID number to be applied for use as key information to an information device may be encrypted by a known method.

### Second Embodiment

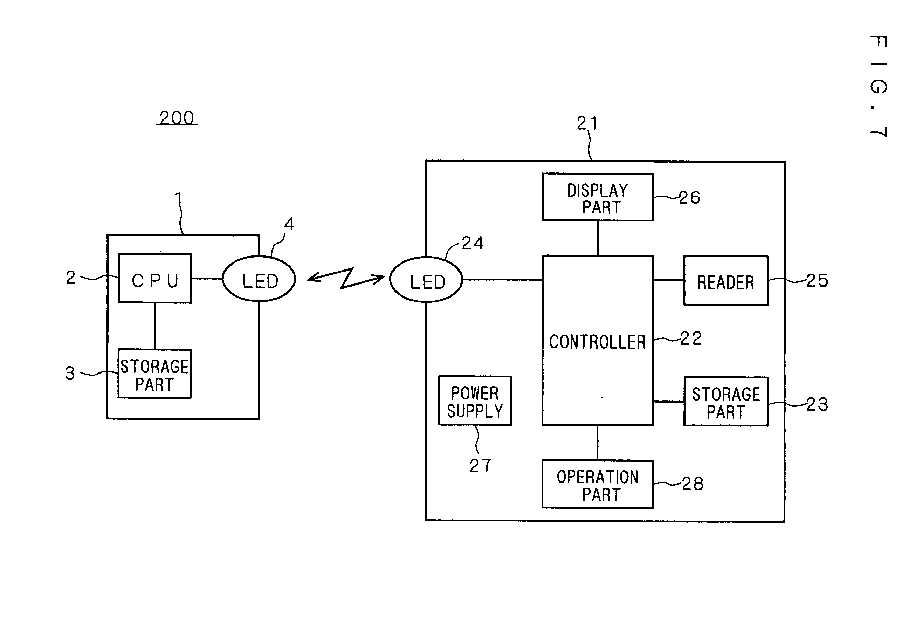

Fig. 7 is a block diagram showing the configuration of a key system 200 according to a second embodiment of the present invention. In the key system 100 of the above-described first embodiment, the key device 1 locks the cellular phone 11 or releases the lock of the cellular phone 11. In the key system 200 of the second embodiment, the key device 1 locks an information device or releases the lock of the information device different from a cellular phone, which is more particularly a PC.

With reference to Fig. 7, the key system 200 includes the above-described key device 1 and a PC 21. The key device 1 and the PC 21 perform data communication therebetween. In the key system 200, the key device 1 is capable of locking the PC 21 or releasing the lock of the PC 21.

The PC 21 has a controller 22, a storage part 23, an LED 24, a reader 25, a display part 26, a power supply 27 and an operation part 28. The controller 22 includes an interface circuit with other blocks, a CPU and the like, and is responsible for control of the operations of other blocks, management of the overall operation of the PC 21 and others. The storage part 23 includes a ROM, a RAM and a hard disk. The storage part 23 stores an execution program of the CPU in the controller 22, an ID number such as a product number unique to the PC 21 intended for use as key information, various application programs and the like.

Like the LED 14 of the cellular phone 11 according to the first embodiment, the LED 24 is capable of sending and receiving serial data to and from the key device 1, and is directly connected to the CPU in the controller 22. The LED 24 is operative to notify a user of whether or not the PC 21 is turned on. The LED 24 is controlled by the CPU in the controller 22 to emit light when the PC 21 is turned on.

The reader 25 reads data from a storage medium such as an optical disk inserted into the PC 21 from outside. The data read out by the reader 25 is sent to the controller 22. The operation part 28 is formed by a key board, mouse and a power on/off switch, and receives input from the outside of the PC 21. The display part 26, formed for example by a liquid crystal display (LCD), is operative to display various kinds of information such as character information sent from the operation part 28, image information read from the storage medium by the reader 25, and others. The power supply 27 converts an alternating voltage given from the outside of the PC 21 to a direct voltage, and supplies the direct voltage thereby converted to the controller 22, storage part 23 and the like.

In the PC 21, when the operation part 28 is operated by a user, the information of this operation is sent to the controller 22, whereby the controller 22 controls the operations of other blocks such as the display part 26 and the reader 25 based on the received information. Then the PC 21 becomes operative to perform various functions according to the operation at the operation part 28. As an example, received character information is displayed or a predetermined application is executed.

The PC 21 has circuits such as a LAN interface circuit or a modem (not shown) that are provided to generally-used PCs, and is capable of being connected to a microphone or headphones.

Like generally-used PCs, the PC 21 of the second embodiment is equipped with a lock function which is so-called "keyboard lock", whereby the PC 21 is capable of being locked and released from the lock by operating the operation part 28, without using the key device 1.

As an example, when a predetermined operation is performed on the operation part 28, the information of this operation is sent to the controller 22. Even when the operation part 28 is operated thereafter, the controller 22 refuses to accept operations on the operation part 28 except certain operations for releasing a lock, or for turning on and off the PC 21. The controller 22 thereby prohibits the execution of functions corresponding to the operations the acceptances of which are refused. As a result, the PC 21 is locked.

In the PC 21, when the operation part 28 is operated to enter a security code for releasing the lock, the information of this operation is sent to the controller 22. The controller 22 thereby accept the operations the acceptances of which have been refused. As a result, the lock of the PC 21 is released. The controller 22 writes information indicating whether or not the PC 21 is currently being locked to the storage part 23, and updates this information each time the lock condition changes.

As in the key device 1, in the PC 21 of the second embodiment, the LED 24 has an anode connected to the input and output port of the CPU in the controller 22, and a cathode that is grounded through a resistor (not shown). This input and output port is set as an input port to cause the LED 24 to emit light, to thereby send serial data at predetermined transmission speed from the LED 24.

The LED 24 of the PC 21 receives data in the same manner as the LED 4 of the key device 1. The signal level at the input and output port of the CPU in the controller 22 is checked several times to count the number of times the signal level thereof reaches high level, to thereby determine the period of light emission of the LED 4. As a result, the CPU in the controller 22 is allowed to make judgment as to whether data is "1" or "0" represented by the difference of the period of light emission of the LED. These steps are repeatedly performed to thereby allow the PC 21 to continuously receive data sent from the key device 1.

Like the key system 100 of the above-described first embodiment, the key system 200 of the second embodiment is capable of locking the PC 21 or releasing the lock of the PC 21 by data communication between LEDs. Next, it is discussed how the key system 200 operates when the PC 21 is locked or released from the lock by using the key device 1. The key device 1 operates in the same manner as in the first embodiment, and hence the operation of the PC 21 will be mainly discussed.

First, the CPU in the controller 22 of the PC 21 performs the receipt of LED data. When the LED 24 of the PC 21 receives neither a signal for checking communication status nor a signal for requesting key information, the CPU in the controller 22 stops the receipt of LED data for a certain period of time. After the certain period of time has elapsed, the CPU in the controller 22 again performs the receipt of LED data to determine whether or not the LED 24 receives the signal for checking communication status or the signal for requesting key information. When the CPU in the controller 22 stops the receipt of LED data, the LED 24 is operative to function as an LED indicating that power is being supplied to the PC 21. Namely, the CPU in the controller 22 causes the LED 24 to always emit light at this time.

When the LED 24 receives the signal for requesting key information from the key device 1, the controller 22 reads key information stored in the storage part 23 and causes the LED 24 to send the key information thereby read. Then the CPU in the controller 22 stops the receipt of LED data for a certain period of time. After the certain period of time has elapsed, the CPU in the controller 22 again performs the receipt of LED data to determine whether or not the LED 24 receives the signal for checking communication status or the signal for requesting key information.

When the LED 24 receives the signal for checking communication status from the key device 1, the controller 22 outputs a signal for requesting transmission of key information. When the LED 24 receives key information from the key device 1 thereafter, the controller 22 performs authentication of this key information. More specifically, the controller 22 determines whether or not the key information stored in the storage part 23 and the key information received from the key device 1 coincide with each other. When there is coincidence therebetween, the authentication is deemed to be successful. When there is no coincidence therebetween, the authentication is deemed to be unsuccessful. When the controller 22 fails to authenticate the received key information, the controller 22 causes the display part 26 to display an error message.

When the key information is successfully authenticated, the controller 22 determines whether or not the PC 21 is currently being locked. As discussed above, the storage part 23 contains the information indicating whether or not the PC 21 is currently being locked. Thus by making reference to this information, the controller 22 is allowed to check the current lock condition of the PC 21. Then by a predetermined operation at the operation part 28, or when the PC 21 is locked by the key device 1, the controller 22 makes an operation at the operation part 28 acceptable the acceptance of which has been refused, whereby the lock of the PC 21 is released. When the lock of the PC 21 is released, the controller 22 refuses to accept operations except a certain operation for releasing the lock and the like, whereby the PC 21 is locked.

The controller 22 thereby locks the PC 21 or releases the lock of the PC 21 based on the key information received from the key device 1. Then the CPU in the controller 22 stops the receipt of LED data for a certain period of time. After the certain period of time has elapsed, the CPU in the controller 22 again performs the receipt of LED data to determine whether or not the LED 24 receives the signal for checking communication status or the signal for requesting key information.

As discussed, in the key system 200 of the second embodiment, a user brings the key device 1 close to the PC 21 so that the PC 21 is within an area capable of communicating with the PC 21. Data communication between LEDs thereby starts to lock the PC 21 or release the lock of the PC 21 by using the data communication between the LEDs.

Like in the second embodiment, a CPU directly controls the operation of an LED to realize the transmission and receipt of data to and from the LED. Further, like the PC 21, a generally-used PC is equipped with an LED that emits light when the PC is turned on. Thus the PC 21 does not require a specific device for realizing data communication to and from an LED. Further, an LED is normally less expensive than an external storage medium such as a memory card. Thus by locking the PC 21 or releasing the lock of the PC 21 by using data communication to and from an LED as in the key system 200 of the second embodiment, security of the PC 21 can be improved with a low-cost configuration.

The PC 21 of the second embodiment uses an LED indicative of the presence or absence of power supply to perform data communication with the key device 1. Another type of LED provided to a generally-used PC, such as an LED that lights up when access is made to the hard disk in the storage part 23, may alternatively be used to perform data communication with the key device 1.

The invention according to the first or second embodiment may be applied to other information devices such as a PDA (personal digital assistance) that, like the above-described cellular phone 11 and the PC 21, includes an LED and a controller for controlling the operation of the LED. In this case, the key device 1 is also used to lock the PDA or release the lock of the PDA.

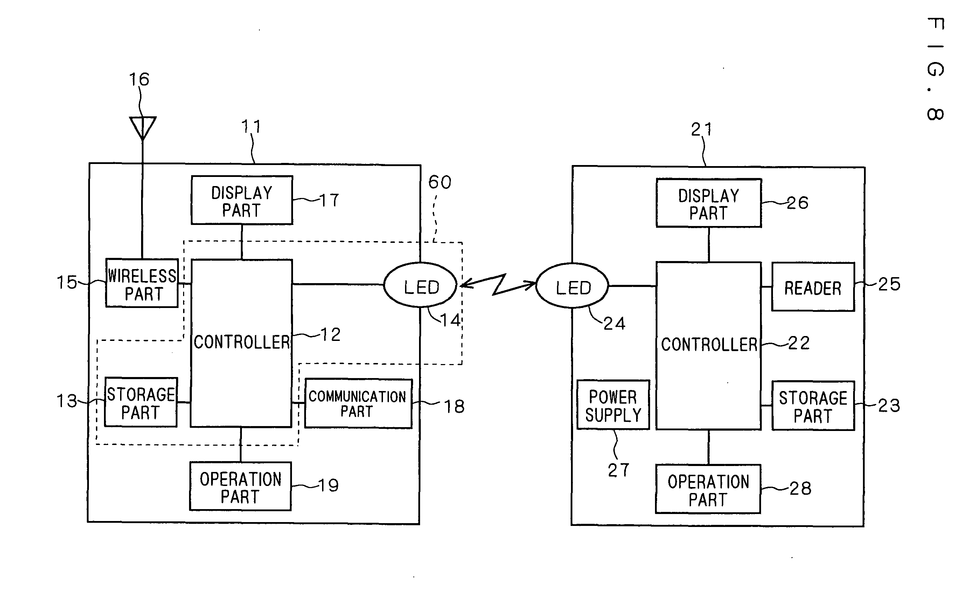

The function of the key device 1 may be incorporated into a portable information device such as a cellular phone or a PDA. Fig. 8 is a block diagram showing the system configuration formed by incorporating the function of the key device 1 into the cellular phone 11 of the first embodiment. The function of the key device 1 is realized in the block surrounded by dashed lines 60 in Fig. 8. Namely, the controller 12, the storage part 13 and the LED 14 perform the same operations as those of the CPU 2, the storage part 3 and the LED 4 of the key device 1, respectively. The cellular phone 11 is thereby also operative to serve as the key device 1. In the following, it will be discussed how the cellular phone 11 operates when the PC 21 is locked or the lock of the PC 21 is released by using the cellular phone 11 equipped with the key device 1.

The CPU in the controller 12 determines whether or not key information is stored in the storage part 13 (this operation will be referred to as "operation for checking key information"). When it is determined that there is no key information stored in the storage part 13, the CPU in the controller 12 causes the LED 14 to send a signal for requesting key information. When the LED 14 receives key information from the PC 21, the CPU in the controller 12 stores the received key information in the storage part 13. Then the cellular phone 11 stops the operation as the key device 1 for a certain period of time. After the certain period of time has elapsed, the CPU in the controller 12 again performs the operation for checking key information. When the cellular phone 11 stops its operation as the key device 1, the cellular phone 11 performs the above-discussed operation shown in Fig. 6.

When the LED 14 does not receive key information from the PC 21 within a predetermined period of time, the cellular phone 11 stops its operation as the key device 1 for a certain period of time. After the certain period of time has elapsed, the CPU in the controller 12 again performs the operation for checking key information.

When the presence of key information in the storage part 13 is confirmed, the CPU in the controller 12 causes the LED 14 to send a signal for checking communication status. When the LED 14 receives a signal for requesting transmission of key information from the PC 21, the CPU in the controller 12 reads the key information from the storage part 13 to cause the LED 14 to send the key information thereby read. The PC 21 receives the key information sent from the cellular phone 11 to lock the PC 21 or release the lock of the PC 21 based on the received key information.

Thereafter the cellular phone 11 stops its operation as the key device 1 for a certain period of time. After the certain period of time has elapsed, the cellular phone 11 again performs the operation for checking key information. Thereafter the same steps are repeated.

As discussed, the function of the key device 1 is incorporated into a portable device such as a cellular phone and a PDA, whereby this portable device is allowed to lock an information device such as a PC or release the lock of the same. Thus there is no need to provide a key device separately from the portable device. As a result, a key system with excellent usability can be provided to a user at a low cost.

While the invention has been shown and described in detail, the foregoing description is in all aspects illustrative and not restrictive. It is therefore understood that numerous modifications and variations can be devised without departing from the scope of the invention.

## Claims

1. A key system, comprising:
an information device (11, 21) including a first LED (14, 24) responsible for receipt of data and a first controller (12, 22); and
a key device (1) including a second LED (4) responsible for transmission of data, a storage part (3) for storing key information to said information device, and a second controller (2) for controlling the operation of said second LED,
said second controller in said key device causing said second LED to send said key information stored in said storage part,
said first LED in said information device receiving said key information sent from said second LED, and
said first controller in said information device at least either locking said information device or releasing a lock of said information device based on said key information received by said first LED.

2. The key system according to claim 1, wherein said information device is any one of a cellular phone, a personal computer or a PDA.

3. The key system according to claim 1, wherein said key device (1) is incorporated into a portable information device (11).

4. A key device (1) for use in a key system in which data is transmitted between said key device and an information device (11, 21) through LEDs, said key system comprising said key device, and said information device that is either locked or released from a lock by said key device, said key device comprising:
an LED (4) responsible for transmission of data;
a storage part (3) for storing key information to said information device; and
a controller (2) for controlling the operation of said LED, and
said controller causing said LED to send said key information stored in said storage part.

5. The key device (1) according to claim 4, wherein said key device is incorporated into a portable information device (11).

6. An information device (11, 21) for use in a key system in which data is transmitted between a key device (1) and said information device through LEDs, said key system comprising said key device, and said information device that is either locked or released from a lock by said key device, said information device comprising:
an LED (14, 24) responsible for receipt of data; and
a controller (12, 22),
said LED receiving key information to said information device sent from said key device, and
said controller at least either locking said information device or releasing a lock of said information device based on said key information received by said LED.

7. The information device according to claim 6, wherein said information device is any one of a cellular phone, a personal computer or a PDA.
